# EUROPEAN PATENT APPLICATION

(11) **EP 4 484 615 A1**
(43) Date of publication of application: **01.01.2025**
(21) Application number: 23182381.6
(22) Date of filing: 29.06.2023
(51) Int. Cl.: C25B 9/70, C25B 15/00, C25B 15/023, C25B 15/02

(54) **PARTIAL LOAD OPERATION OF ELECTROLYZER**

(71) Applicant: Siemens Energy Global GmbH & Co. KG, 81739 München (DE)
(72) Inventor: Runser, Thibaut, 90478 Nürnberg (DE); Schumann, Sven, 91452 Wilhermsdorf (DE); Bendig, Marvin, 90513 Zirndorf (DE)

(57) **Abstract**

An method and arrangement of performing electrolysis by a electrolyzer includes an operational mode and a partial operational mode. During the operational mode operational power from a main power source (202) to a first (808) and second set of stacks (806). In response to detecting a power insufficient for the first and the second set of stacks (806) to perform electrolysis without impurities, the electrolyzer is set to a partial operational mode, wherein the first set of stacks (808) perform electrolysis without impurities and the second set of stacks (806) do not perform electrolysis.

## Description

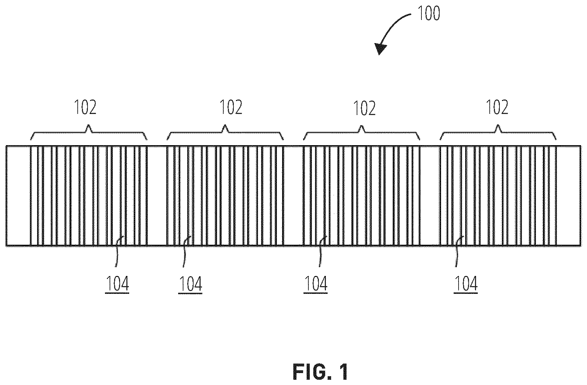

Global warming has become an increasing concern, thereby making energy sources that reduce CO2 emissions more attractive. Electrolyzers, which use electrolysis, have received attention as a means to produce Hydrogen H2, which when used as a fuel source emits no CO2 and may help address the climate crisis. Electrolysis is a widely known electro-chemical process, wherein a direct current, DC, is used to drive an otherwise nonspontaneous chemical reaction. In these processes, electrical energy converts a supply medium into an output medium, chemical energy, via electrolysis. By way of example Hydrogen is produced as an output medium from a water H₂O supply medium with an Oxygen O₂ by product. FIG. 1 illustrates a schematic view of an electrolyzer 100. The electrolyzer 100 includes a plurality of stacks 102, wherein each stack 102 includes a plurality of electrolysis cell 104. Impurities to the output medium, byproduct and/or damage to the electrolyzer 100 may occur if the stack 102 does not have sufficient power or if it is not properly shut down.

Electrolyzers 100 are being arranged with renewable energy sources, such as, wind turbines photovoltaics, and hydroelectric. However, renewables are intermittent energy sources, which is they do not consistently provide energy. For example, there are times that the wind is not available, the wind speed is too high, or for other reasons, the wind turbine does not produce energy. In regard to photovoltaics, the time of day, cloudiness, or other conditions can affect the power production. The tide level may influence the power production for hydroelectric energy. Intermittent energy to the electrolyzer 100can be problematic.

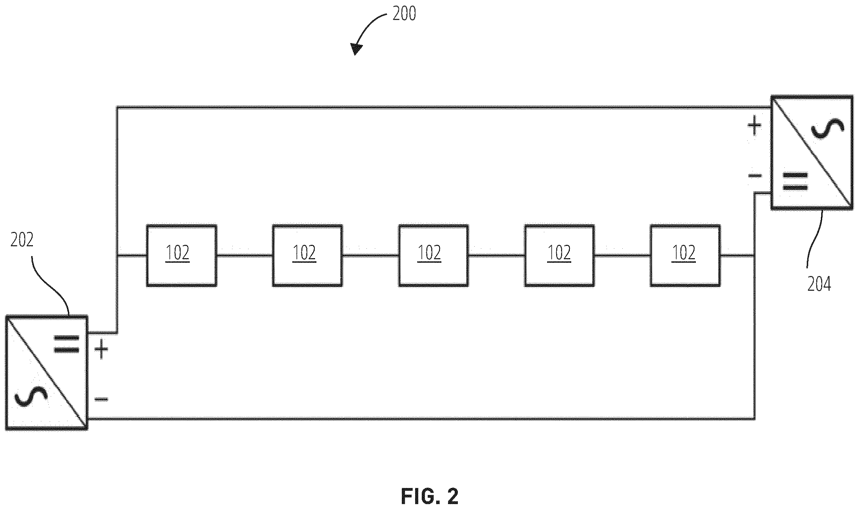

FIG. 2- FIG. 4 illustrate schematic views of a typical electrolyzer arrangement 200 for performing electrolysis. The electrolyzer arrangement 200 includes stacks 102 that are connected in series. The stacks are connected in parallel to a main power source 202 and to a subsidiary power source 204. The main power source 202 and the subsidiary power source 204 refers to DC power supply.

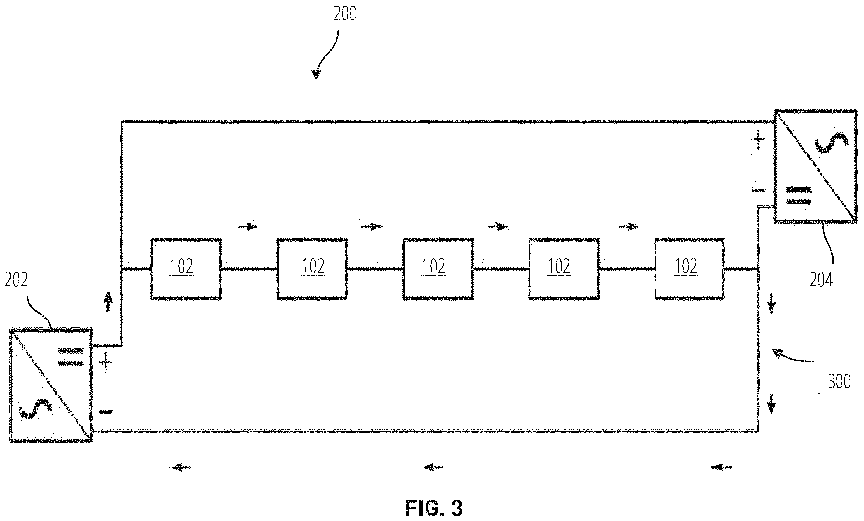

A first mode 300 of the electrolyzer arrangement 200 is illustrated by FIG. 3 wherein the arrows indicate a path flow, i.e., current. During a first mode 300 each of the stacks 102 of electrolyzer arrangement 200 receives a power from the main power source 202 that is sufficient to perform electrolysis without impurities. Therefore, each of the stacks performs electrolysis in the first mode 300.

An electrical device has a power rating, e.g., a maximum input power that the device can operate. Generally, the electrical device may operate with a power that is below the power rating. However, there is a point that the power is below a value that the device may operate as intended and/or safely. Accordingly, each stack 102 has a power rating, wherein the stack 102 can operate below the power rating.

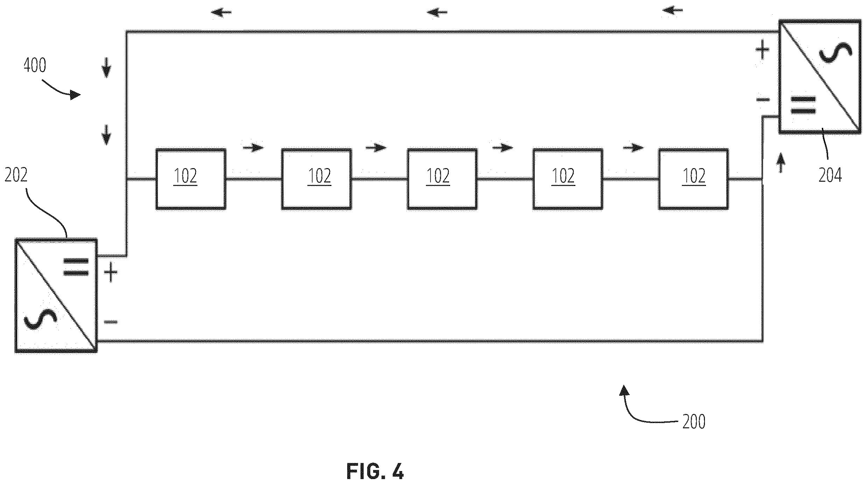

At a threshold that is below the power rating, the input power supplied to the stacks 102 is insufficient to avoid impurities. When the power from the main power source 202 drops to this threshold, the electrolyzer arrangement 200 changes from a first mode 300 to a second mode 400. The second mode 400 of the electrolyzer arrangement 200 is illustrated by FIG. 4. During the second mode 400, each of the stacks 102 are receiving power from the subsidiary power source 204. Power received by the stacks 102 is below the threshold such that the power received is insufficient to perform electrolysis without impurities.

It is an object of the present invention to provide a partial load operation of an electrolyzer.

This object is solved by a method according to the independent claim 1 and by an electrolyzer arrangement according to independent claim 10.

Preferred embodiments are subject of correspondingly dependent claims and the following description.

While impurities are undesirable the lack of the output medium production is also undesirable. Furthermore, stacks receiving a low power, under the threshold for the respective stacks to be operational, can reduce the lifetime and the efficiency of the stack. Moreover, when a renewable energy is the main power source 202 the time that the power is below the threshold may be intermittent causing the stacks to repeatedly cycle between operational and standby and/or shutdown. An improved electrolyzer operation and electrolyzer are needed.

While multiple embodiments or constructions may be described herein, any features, methods, steps, components, etc., described with regard to one embodiment are equally applicable to other embodiments absent a specific statement to the contrary.

Also, it should be understood that the words or phrases used herein should be construed broadly, unless expressly limited in some examples.

The terms "including," "having," and "comprising," as well as derivatives thereof, mean inclusion without limitation.

The singular forms "a", "an" and "the" are intended to include the plural forms as well, unless the context clearly indicates otherwise.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

The phrase "based on" is intended to mean "based, at least in part, on" unless explicitly stated otherwise.

The terms "about" or "substantially" or like terms are intended to cover variations in a value that are within normal industry manufacturing tolerances for that dimension. If no industry standard is available, a variation of twenty percent would fall within the meaning of these terms unless otherwise stated.

The terms "operational", "operation", and "operate as intended" are defined herein as a condition when the respective stack is receiving power sufficient to perform electrolysis without impurities.

The term "without impurities" is defined as the production of the oxygen byproduct with less than 2% of hydrogen in the byproduct or the production of the hydrogen output medium with trace amounts of oxygen in output medium.

The term "operational power" is defined as the power supplied to the stack such that the stack is operational.

The term "operational mode" is defined as the condition when all of the stacks 102 in the electrolyzer are operational.

The terms "nonoperational" and "nonoperation" are defined as a condition when the respective stack is receiving low power or receiving no power.

The term "nonoperational power" is defined the power supplied to the stack such that the stack is nonoperational, this may be a low power or no power.

The term "standby" is defined as a condition when the stack is receiving a low power, i.e., a power that is insufficient to perform electrolysis without impurities. In standby the stack can be producing impurities. With impurities is a oxygen byproduct with more than 2% of hydrogen in the oxygen byproduct or a hydrogen output medium with more than trace amounts of oxygen in the output medium. In an embodiment, the produced output medium or the produced byproduct is not be saved. The stacks can be kept warm and pressurized in standby; thereby ready to transition back to being operational.

The term "shutdown" is defined herein as a condition when the respective stack is receiving no power. The stack is typically depressurized and is cold when having no power.

The term "partial operational mode" is defined as a condition when a portion of the stacks 102 is operational and another portion of the stacks 102 is nonoperational.

According to an aspect, the present invention refers to a method of performing electrolysis by an electrolyzer, wherein during an operational mode of the electrolyzer, operational power is supplied from a main power source to a first set of stacks and to a second set of stacks, wherein the first and second set of stacks are operational. A first power threshold from the main power source that is insufficient for the first set of stacks and the second set of stacks to be operational is detected. In response to the said detecting of the first power threshold, the electrolyzer is set to a partial operational mode. According to the partial operational mode, the second set of stacks is excluded from the main power source, wherein the first set of stacks remain operational, and a nonoperational power from a subsidiary power source is supplied to the second set of stacks, wherein the nonoperational power from the subsidiary power source is insufficient for the second set of stacks to be operational.

The main power source and the subsidiary power source are each a DC power supply, such as a battery, rectifier, or DC generator. The main power source may be from a renewable source such as wind turbine, photovoltaic, or hydroelectric. The subsidiary power source may be from a renewable source.

The partial operational mode advantageously allows a portion of the stacks to be operational and another portion to be nonoperational. Thereby, byproduct without impurities is continued to be produced by the first set of stacks while the second set of stacks is nonoperational. Advantageously, a reduction in life span and a reduction of efficiency may be avoided in the portion of the stacks that remain operational.

The first power threshold is less than the load for the first and the second sets of stacks to be operational. The first power threshold is stack dependent, e.g., manufacture, model. For example, the first power threshold is a value between 20%-40% of the power rating of the stacks could be suitable for most electrolyzer. In a particular embodiment the first power threshold is 40% of the power rating. By excluding the second set of stacks from receiving power from the main power source, the power from the main power source is sufficient for the first set of stacks to be operational. The nonoperational portion, the second set of stacks, may be set to standby to allow for quick transition back to operational mode. Alternatively, the second set of stacks may be depressurized and shutdown, for example, if the subsidiary power source has insufficient power to run the second set of stacks in standby.

According to an aspect of the invention, when a second power threshold from the main power source that is insufficient for the operational portion of stacks, the first set of stacks, to remain operational is detected, the electrolyzer is set from an operational mode to a nonoperational mode. The nonoperational power from the subsidiary power source is supplied to the first set of stacks, wherein the power from the subsidiary power source is insufficient for the first or the second set of stacks to be operational.

It would be understood that while the embodiment is described with two sets of stacks, that there may be more sets of stacks, in which case multiple sets of stacks may be excluded at different threshold points until the last set is excluded and all stacks are nonoperational.

The second power threshold is power that is less than the first power threshold. Similarly, to the first power threshold, the second power threshold is stack dependent. The second power threshold is a value between 0%-20% of the power rating of the stacks below the power rating of the stacks. In a particular example, the second power threshold is 20% of the power rating of the stacks. The second power threshold is less than the load for the first set of stacks to be operational. The nonoperational portion, the second set of stacks, may be set to standby to allow for quick transition back to operational mode. Alternatively, the second set of stacks may be depressurized and shutdown if the subsidiary power source has insufficient power to run the second set of stacks in standby.

According to an aspect of the invention, during the nonoperational mode, the first set of stacks and the second set of stacks may both be nonoperational. It is possible that one of the sets of stacks is in standby while the other of the sets is shutdown. This has the benefit that the set into standby may be quickly transitioned to be operational without having to heat up and/or pressurize the set.

In an embodiment, the main power source is from a renewable energy source, e.g., wind turbine or photovoltaic.

In an embodiment, the subsidiary power source is a renewable energy source or battery.

According to an embodiment, hydrogen is the output medium that is produced from an input medium of water with a by-product of oxygen. Thereby, a non-CO2 emitting fuel is produced.

According to an in embodiment, an electrolyzer arrangement is provided. The electrolyzer arrangement may be capable of performing the method. The electrolyzer includes a main power source, a subsidiary power source, and a plurality of stacks. The plurality of stacks includes a first set of stacks and a second set of stacks. A first switching device is arranged between the first set of stacks and the second set of stacks. The first set of stacks is connected to the main power source. A bypass switching device is arranged between the first set of stacks and the main power source.

According to an embodiment, in an operational configuration, the first switching device is closed, the bypass switching device is open, and the first set of stacks is connected to the main power source. A first closed loop path is formed and configured to supply an operational power from the main power source to the first set of stacks and to the second set of stacks via the closed first switching device. In the operational configuration, each of the plurality of stacks is operational

According to an embodiment, in a partial operational configuration, the first switching device is open, the bypass switching device is closed, the second set of stacks is excluded from the main power source, and the second set of stacks is connected to the subsidiary power source. The partial operational configuration includes the bypass path configured to supply operational power from main power source to the first set of stacks. A second path is formed and configured to supply nonoperational power from the subsidiary power source to the second set of stacks.

The first switching device may include a first semiconductor switch and a first mechanical switch. Similarly, the bypass switching device may include a bypass semiconductor switch and a first mechanical switch. When first switching device is open the first semiconductor switch and the first mechanical switch are open. Conversely, when the first switching device is closed the first semiconductor switch and the first mechanical switch are closed. When bypass switching device is open the bypass semiconductor switch and the bypass mechanical switch are open. Conversely, when the bypass switching device is closed the bypass semiconductor switch and the bypass mechanical switch are closed. By providing switching devices, first switching device and the bypass switching device, with both a semiconductor switch and a first mechanical switch, switching can be done to avoid arcing. For example, closing the semiconductor switch first allows a current to pass through the switch which can stabilize the power though the switch prior to closing the mechanical switch. Hence, arcing is avoided. In reverse, opening the mechanical switch prior to opening of the semiconductor switch can avoid arcing.

In an embodiment, the electrolyzer arrangement includes a relay that comprises a first contact and a second contact. When the relay is engaged with the first contact, the subsidiary power source is connected with the second set of stacks. When the relay is engaged with the second contact, the subsidiary power source is connected with the first and the second set of stacks. The relay is engaged with the first contact in the operational configuration and in the partial operational configuration. The relay may be a polarization relay, wherein the disconnected stacks are polarized through the polarization relay. The relay can be either semiconductor based or mechanical based. Since the relay does not require fast switching, it would be beneficial to use a mechanical switch and therefore avoid losses. The disconnected stacks are polarized through the polarization relay.

In an embodiment, the electrolyzer arrangement includes a nonoperational configuration wherein the first semiconductor switch and the first mechanical switch are closed, the bypass semiconductor switch and the bypass mechanical switch are open, the relay is engaged with the second contact. A nonoperational path is formed and configured to supply nonoperational power from the subsidiary power source to the first and the second set of stacks. None of the stacks are operational in the nonoperational mode.

In an embodiment, a first transient configuration that follows the operational configuration is provided. The first semiconductor switch is closed, the first mechanical switch is closed, the bypass semiconductor switch is closed, and the bypass mechanical switch is open. A bypass path is formed and a first path is formed. The bypass path is configured to supply operational power from the main power source to the first set of stacks. The first path is configured to supply nonoperational power from the main power source to the second set of stacks.

In an embodiment, a second transient configuration that follows the first transient configuration is provided. The first semiconductor switch is open, the first mechanical switch is open, the bypass semiconductor switch is closed, and the bypass mechanical switch is open. The A second path is formed and configured to supply nonoperational power from the subsidiary power source.

The configurations described above advantageously can be transitioned, between each other, quickly. A quick transition is especially useful when closing a switch, where the semiconductor switch is closed prior to the mechanical switch whereby conduction loses in the semiconductor switch reduced.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a schematic view of an electrolyzer.
FIG. 2 illustrates a schematic view of electrolyzer circuit according to the prior art.
FIG. 3 is a schematic view that illustrates the electrolyzer circuit of FIG. 2 in further detail.
FIG. 4 is a schematic view that illustrates the electrolyzer circuit of FIG. 2 and FIG. 3 in further detail.
FIG. 5 illustrates a method during an operational mode in accordance with one embodiment.
FIG. 6 illustrates method for a partial operational mode that is compatible with the method of FIG. 5.
FIG. 7 illustrates a method for a nonoperational mode that is compatible with the methods of FIG. 5 and FIG. 6.
FIG. 8 illustrates an embodiment of an electrolyzer arrangement according to the invention.
FIG. 9 illustrates a schematic view of an operational configuration of the electrolyzer arrangement of FIG. 8.
FIG. 10 illustrates a schematic view of a first transient configuration of the electrolyzer arrangement of FIG. 8 and FIG. 9
FIG. 11 illustrates a schematic view of a second transient configuration of the electrolyzer arrangement of FIG. 8 - FIG. 10
FIG. 12 illustrates a schematic view of a partial operational configuration of the electrolyzer arrangement of FIG. 8 - FIG. 11
FIG. 13 illustrates a schematic view of nonoperational configuration of the electrolyzer arrangement of FIG. 8 - FIG. 11

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

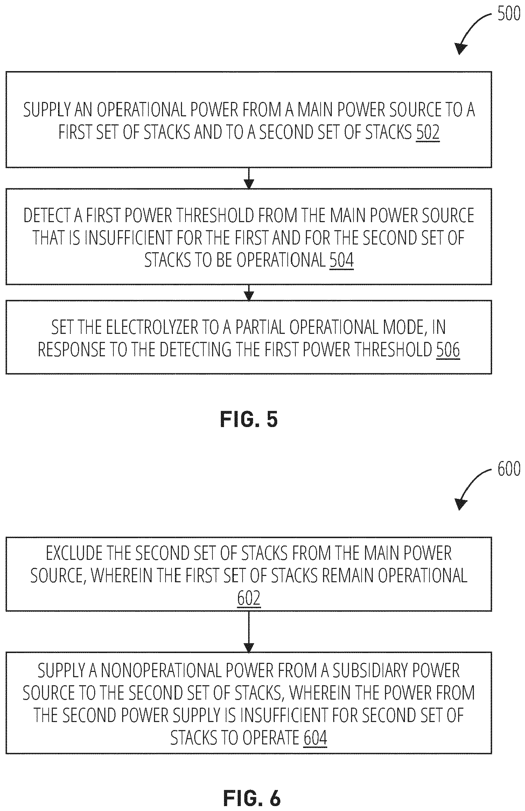

According to FIG. 5 a method during an operational mode 500 is illustrated.

In block 502 an operational power is supplied from a main power source 202 to a first set of stacks and to a second set of stacks. In block 504, a first power threshold from the main power source 202 that is insufficient for the first set of stacks and for the second set of stacks to be operational is detected. In block 506, the electrolyzer is set to a partial operational mode in response to the first power threshold detection.

According to FIG. 6 a method of setting electrolyzer to a partial operational mode from an operational mode 600 is illustrated.

In block 602, the second set of stacks is excluded from receiving power from the main power source 202, wherein the first set of stacks remain operational. In block 604, nonoperational power from a subsidiary power source 204 is supplied to the second set of stacks, wherein the nonoperational power from the main power source 202 is insufficient for second set of stacks to be operational.

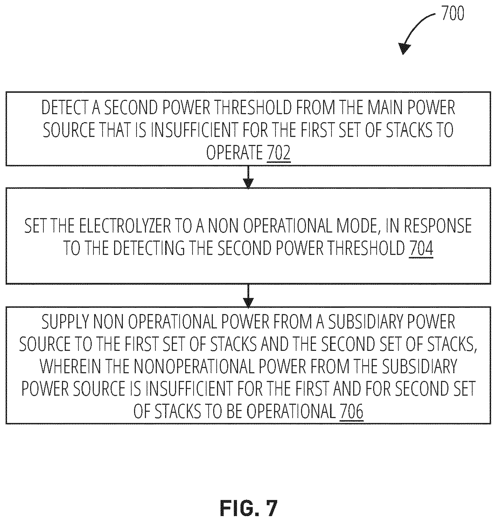

According to FIG. 7 a method of a partial operational mode of the electrolyzer 700 is illustrated.

In block 702, a second power threshold from the main power source 202 that is insufficient for the first set of stacks to be operational is detected. In block 704, the electrolyzer is set to a nonoperational mode, in response to the detecting the second power threshold. In block 706, setting the electrolyzer to a nonoperational mode includes supplying nonoperational power from a subsidiary power source 204 to the first set of stacks, wherein the nonoperational power from the main power source 202 is insufficient for the first and the second set of stacks to be operational.

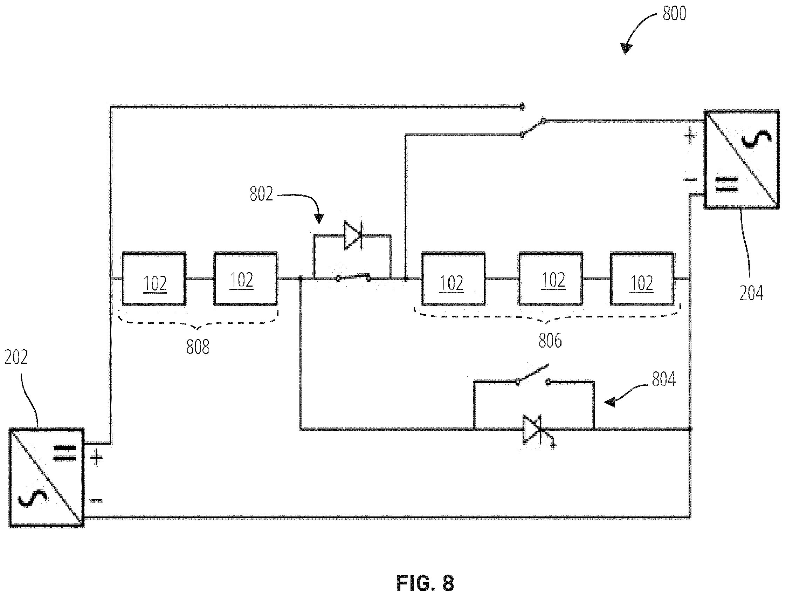

FIG. 8 illustrates a schematic view of an improved electrolyzer arrangement 800. The electrolyzer arrangement 800 includes a plurality of stacks 102, including a first set of stacks 808 arranged in series and a second set of stacks 806 arranged in series. The first set of stacks 808 is connected to a main power source 202. A first switching device 802 is disposed between the first set of stacks 808 and the second set of stacks 806. A bypass switching device 804 is arranged between the first set of stacks 808 and the main power source 202. Both the first switching device 802 and the bypass switching device 804 have an open and closed position.

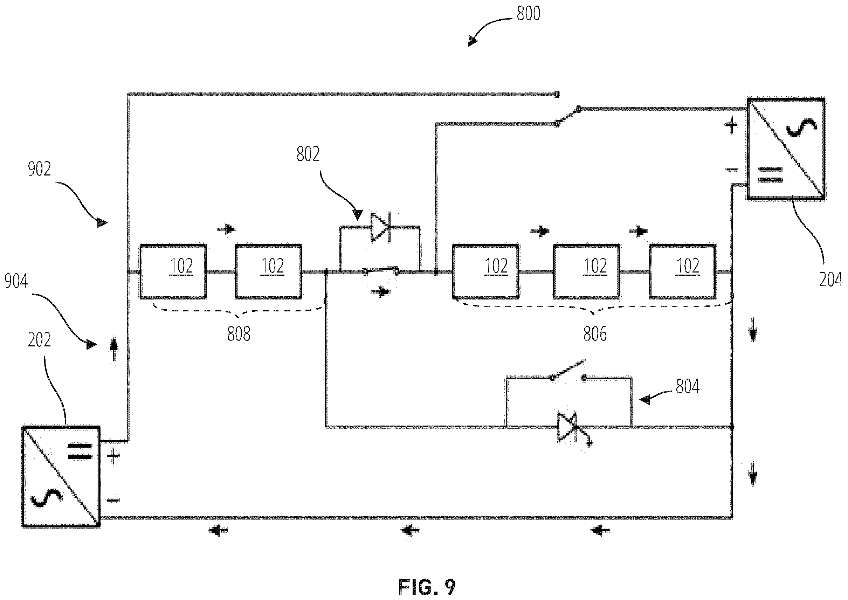

FIG. 9 illustrates a schematic view of an operational configuration 902 of the electrolyzer arrangement 800 of FIG. 8. The operational configuration 902 includes a closed loop path 904 which is denoted by the arrows. According to the illustration, the first switching device 802 is closed and the bypass switching device 804 is open, whereby a closed loop path 904 is formed between the main power source 202, the first set of stacks 808, and the second set of stacks 806.

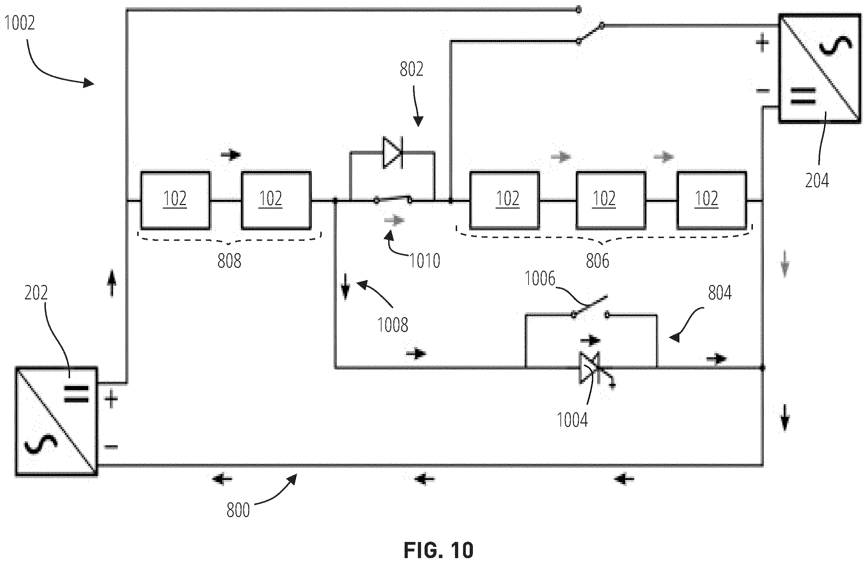

FIG. 10 illustrates a schematic view of a first transient configuration 1002 of the electrolyzer arrangement 800 that is compatible with FIG. 8 and FIG. 9. The first transient configuration 1002 includes a bypass path 1008 that is denoted by the black arrows and a first path 1010 that is denoted by the gray arrows. The bypass switching device 804 includes a bypass semiconductor switch 1004 and a bypass mechanical switch 1006. According to the illustration, the bypass semiconductor switch 1004 is closed and the bypass mechanical switch 1006 is open, whereby the bypass path 1008 is formed from the main power source 202 through first set of stacks 808 and the bypass switching device 804. Thereby the bypass path 1008 does not include, that is bypasses, the second set of stacks 806. The first switching device 802 is closed whereby the first path 1010 from the main power source 202 through the first set of stacks 808 and the second sets of stacks 806 is formed.

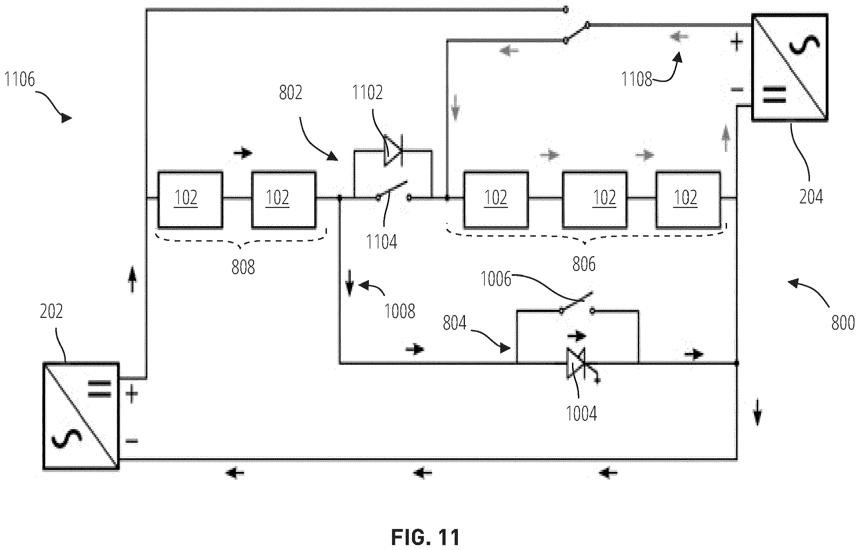

FIG. 11 illustrates a schematic view of a second transient configuration 1106 of the electrolyzer arrangement 800 that is compatible with FIG. 8 - FIG. 10. The second transient configuration 1106 includes the bypass path 1008 that is formed in the first transient configuration as described in FIG. 10. The bypass semiconductor switch 1004 is closed and the bypass mechanical switch 1006 is open.

The second transient configuration 1106 includes a second path 1108 that is denoted by the gray arrows. The first switching device 802 includes a first mechanical switch 1104 and a first semiconductor switch 1102. According to the illustration the first mechanical switch 1104 and the first semiconductor switches 1102 are open, wherein the second path 1108 from the subsidiary power source 204 through the second set of stacks 806 is formed.

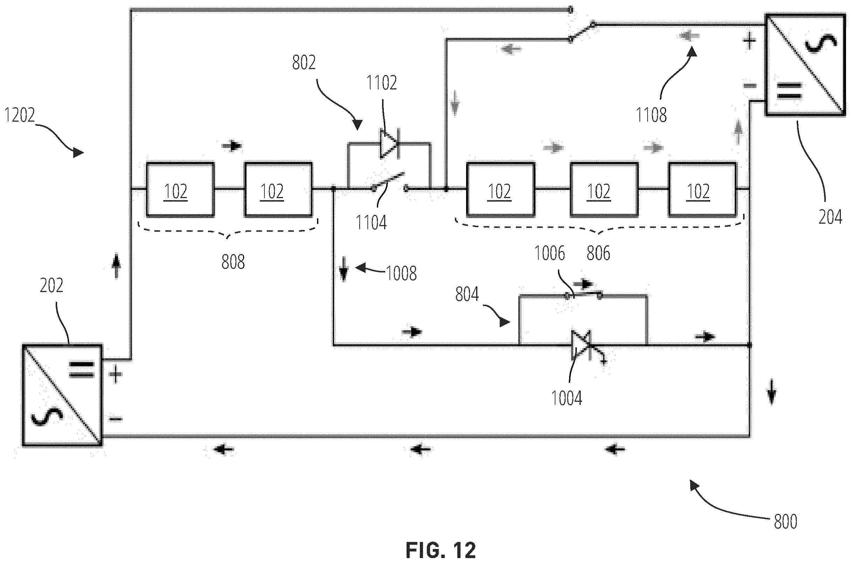

FIG. 12 illustrates a schematic view of a partial operational configuration 1202 of the electrolyzer arrangement 800 that is compatible with FIG. 8 - FIG. 11. The partial operational configuration 1202 includes the bypass path 1008 and the second path 1108 as described above. According to the illustration, the bypass semiconductor switch 1004 and the bypass mechanical switch 1006 are closed, and the first semiconductor switch 1102 and the first mechanical switch 1104 are open.

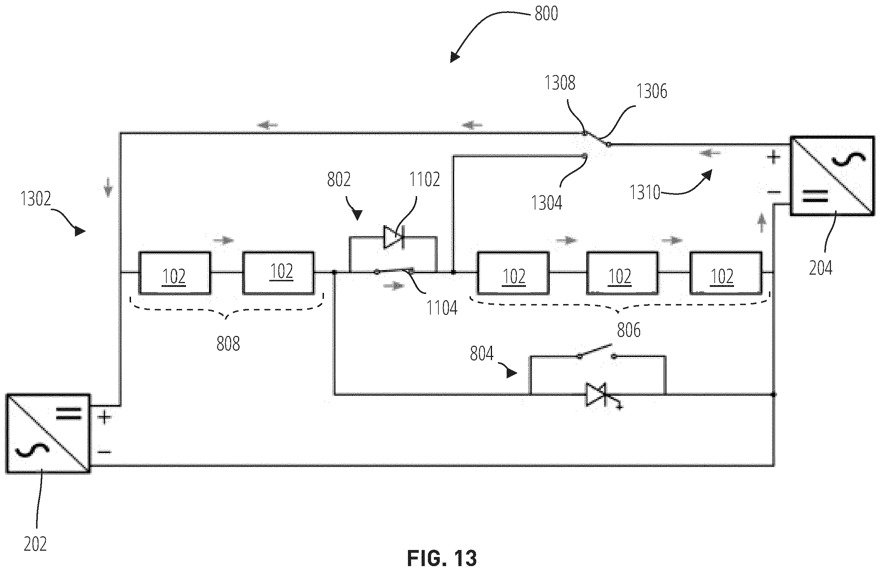

FIG. 13 illustrates a schematic view of a nonoperational configuration 1302 of the electrolyzer arrangement 800 of FIG. 8 - FIG. 12. The first switching device 802 is closed, both the first mechanical switch 1104 and the first semiconductor switch 1102 are closed, and the bypass switching device 804 is open, the bypass mechanical switch 1006 and the bypass semiconductor switch 1004 are open. The electrolyzer arrangement 800 includes a relay switch 1306 that connects the subsidiary power source 204 to either the second set of stacks 806 or to the first set of stacks 808 based on the which contact, a first contact 1304 or a second contact 1308, that the relay switch is engaged. The relay switch 1306 is engaged with the second contact 1308 forming a closed loop path which is denoted by the arrow.

It can be seen in the FIG. 8 - FIG. 11, the relay switch is engaged with the first contact 1304, connecting the subsidiary power source 204 to the second set of stacks 806.

The electrolyzer arrangement 800 and the various configurations of FIG. 9 - FIG. 12 are now described in further detail.

The closed loop path 904 of the operational configuration 902 provides a path for power to flow from the main power source 202 through the first set of stacks 808 to the second set of stacks 806 via the first switching device 802. The power, flowing from the main power source 202 through the first set of stacks 808 , through the first switching device 802, and through the second set of stacks 806, is sufficient for each of the plurality of the stacks 102 to be operational. Thus, in the operational configuration 902, each stack performs electrolysis without impurities, whereby the electrolyzer arrangement 800 is in the operational mode.

In response to a first threshold being detected, the electrolyzer arrangement 800 changes from the operational configuration 902 to the first transient configuration 1002 by closing the bypass semiconductor switch 1004 to create the bypass path. It would be understood by those skilled in the art that the current mainly flows through the bypass path via the bypass switching device 804, but as the second set of stacks 806 are not fully short circuited, that is the first switching device 802 is closed, a small current flows through the first path. Hence, the first set of stacks 808 receive an operational power from the main power source 202 and the second set of stacks 806 receive a nonoperational power from the main power source 202.

The second transient configuration 1106 configuration is subsequent to the first transient configuration 1002. The first mechanical switch 1104 is opened.

The first switching device 802 includes first semiconductor switch 1102 and a first mechanical switch 1104. The first mechanical switch 1104 is opened and the first semiconductor switch 1102 is opened, whereby second set of stacks 806 are excluded from receiving power from the main power source 202, but instead receive power from the subsidiary power source 204 that is insufficient to perform electrolysis without impurities.

To complete the transition from the operational configuration 902 to the partial operational configuration 1202, which represents the partial operational mode, the bypass mechanical switch 1006 is closed.

In response to a second threshold being detected, the electrolyzer arrangement 800 changes from the partial operational configuration 1202 to a nonoperational configuration 1302, which represents the nonoperational mode, by closing the bypass semiconductor switch 1004.

It would be understood that the sequence of configurations may be reversed to allow stacks to return to an operational mode.

Furthermore, sequences may be combined. For example, it is described above that the bypass switching device 804 closes prior to the opening of the first switching device 802. It would be understood that these actions could occur simultaneously.

The depicted number of stacks 102, as well as the number of stacks in each set is merely for illustrative purposes only. One skilled in the art would understand that more or less than five stacks may be employed. Additionally, one skilled in the art would understand the number of stacks in each set is at least one and the number of stacks in each set may be different than in the illustrations.

Furthermore, for simplicity, only two sets of stacks have been illustrated. It would be understood that additional sets may be included along with additional bypass switching devices 804. Wherein each set may be excluded individually by a bypass switching device 804.

Specific switch types, hybrid and relay, have been depicted. However, it would be understood that these are merely examples and that other types may be used. Furthermore, it would be possible to increase the number of switches as well as decrease the number of switches.

A method and arrangement to enable a partial operation have been described in according to the illustrations of FIG. 5-FIG. 13 above. But it would be understood that other configurations may be utilized deviated from the concept of the invention. And that other configurations are possible to reduce either the bypass switching device 804losses or the first switching device (802) losses.

## Claims

1. A method of performing an electrolysis by a electrolyzer, the method comprising:
during an operational mode of the electrolyzer (500):
supplying an operational power from a main power source (202) to a first set of stacks (808) and to a second set of stacks (806), wherein the first (808) and the second set of stacks (806) are operational (502);
detecting a first power threshold from the main power source (202) that is insufficient for the first set of stacks (808) and for the second set of stacks (806) to be operational (504); and
setting the electrolyzer to a partial operational mode, in response to the detecting the first power threshold (600), comprising:
excluding the second set of stacks (806) from the main power source (202), wherein the first set of stacks (808) remain operational (602), and
supplying a nonoperational power from a subsidiary power source (204) to the second set of stacks (806) wherein the nonoperational power from the subsidiary power source (204) is insufficient for second set of stacks (806) to be operational (604).

2. The method of claim 1,
wherein the second set of stacks (806) is set to a standby.

3. The method of claim 1 or 2,
during the partial operational mode (700):
detecting a second power threshold from the main power source (202) that is insufficient for the first set of stacks (808) to be operational (702); and
setting the electrolyzer to a nonoperational mode, in response to the detecting the second power threshold (704), comprising supplying a nonoperational power from the subsidiary power source (204) to the first set of stacks (808) and to the second set of stacks (806), wherein the nonoperational power from the subsidiary power source (204) is insufficient for first and the second set of stacks (806) to be operational (706).

4. The method of any one of claims 1 to 3,
wherein hydrogen is produced from a water source by the stacks (102) operational mode.

5. The method of any one of claims 1 to 4,
wherein the first threshold is a value between 20%-40% of a power rating of the operational stacks.

6. The method of any one of claims 1 to 5,
wherein the second threshold is value 0-20% of a power rating of the operational stacks.

7. An electrolyzer arrangement (800), capable of performing the method any one of claims 1 to 6, comprising:
the main power source (202);
the subsidiary power source (204);
a plurality of stacks (102), comprising the first set of stacks (808) connected in series, and the second set of stacks (806) connected in series, wherein the first set of stacks (808) is connected to the main power source (202);
a first switching device (802) arranged between the first set of stacks ( 808) and the second set of stacks (806);
a bypass switching device (804) arranged between the first set of stacks ( 808) and the main power source (202); and
an operational configuration (902), wherein the first switching device (802) is closed and the bypass switching device (804), wherein a closed loop path (904) is formed between the main power source 202, the first set of stacks (808), and the second set of stacks (806), wherein the electrolyzer arrangement (800) is in the operational mode configured to supply the operational power from a main power source (202) to the first set of stacks (808) and to the second set of stacks (806),
a partial operational configuration (1202), the first switching device (802) is opened and the bypass switching device (804) switching device (806) is closed, wherein the electrolyzer arrangement (800) is in the partial operational mode, wherein the second set of stacks (806) is excluded from the main power source (202) and connected to the subsidiary power source (204), wherein the first set of stacks (808) are operational, and the second set of stacks (806) are nonoperational.

8. An electrolyzer arrangement (800), capable of performing the method claim 7,
wherein the first switching device (802) a includes a first semiconductor switch (1102) and an first mechanical switch (1104), wherein opening of the first switching device (802) is a sequence of first opening the first mechanical switch (1104) followed by opening the first semiconductor switch (1102), and
wherein the bypass switching device (804) includes a bypass mechanical switch (1006) and a bypass semiconductor switch (1004), wherein closing of the bypass switching device (804) is a sequence of first closing the first semiconductor switch followed by closing the first mechanical switch (1104).

9. The electrolyzer arrangement (800) of claim 7 or 8, comprising:
a relay (1306) comprising a first contact (1304) and a second contact (1308),
wherein the relay (1306) engages with the first contact (1304) in the operational mode and in the partial operational mode, and the second set of stacks (806) is connected to the subsidiary power source (204), and
wherein the relay (1306) engages with the second contact (1308), in the nonoperational mode, and the first set of stacks (808) is connected to the subsidiary power source (204),

10. An electrolyzer arrangement (800), comprising:
a main power source (202);
a subsidiary power source (204);
a plurality of stacks (102) , comprising a first set of stacks (808) connected is series and a second set of stacks (806) connected in series, wherein the first set of stacks (808) is connected to the main power source (202);
a first switching device (802) arranged between the first set of stacks ( 808) and the second set of stacks (806), the first switching device (802) includes a first semiconductor switch (1102) and a first mechanical switch (1104);
a bypass switching device (804) arranged between the first set of stacks (808) and main power source (202), the bypass switching device (804) includes a bypass mechanical switch (1006) and a bypass semiconductor switch (1004),
an operational configuration (902) wherein the first semiconductor switch (1102) and the first mechanical switch (1104) are closed, the bypass semiconductor switch (1004) and the bypass mechanical switch (1006) are open, and the first set of stacks (808) is connected to the main power source (202), wherein a first closed loop path (904) is formed and configured to supply an operational power from the main power source (202) to the first set of stacks (808) and to the second set of stacks (806) via the closed first switching device (802); and
a partial operational configuration (1202) wherein the first semiconductor switch (1102) and the first mechanical switch (1104) are open, the bypass semiconductor switch (1004) and the bypass mechanical switch (1006) are closed, the second set of stacks (806) is excluded from the main power source (202), and the second set of stacks (806) is connected to the subsidiary power source (204), wherein a bypass path (1008) is formed and configured to supply operational power from main power source (202) to the first set of stacks (808), and wherein a second path (1108) is formed and configured to supply nonoperational power from the subsidiary power source to the second set of stacks (806).

11. The electrolyzer arrangement (800) of claim 10, comprising
a relay (1306) comprising a first contact (1304) and a second contact (1308), wherein the relay engaged with the first contact (1304) connects the subsidiary power source (204) with the second set of stacks (806) and the relay engaged in the second contact (1308) connects the main power source (202) with the first set of stacks (808); and
a nonoperational configuration (1306) wherein the first semiconductor switch (1102) and the first mechanical switch (1104) are closed, the bypass semiconductor switch (1004) and the bypass mechanical switch (1004) are open, the relay is engaged with the second contact (1308), wherein a nonoperational path is formed and configured to supply nonoperational power from the subsidiary power source (204) to the first and second set of stacks (806).

12. The electrolyzer arrangement (800) of claim 11,
wherein the relay (1306) is engaged with the first contact (1304) in the operational configuration (902) and in the partial operational configuration (1202).

13. The electrolyzer arrangement (800) of any one of claims 10 to 12,
a first transient configuration (1002) wherein the first semiconductor switch (1102) is closed, the first mechanical switch (1104) is closed, the bypass semiconductor switch (1004) is closed, and the bypass mechanical switch (1004) is open, the bypass path (1008) is formed and configured to supply operational power from the main power source (202) to the first set of stacks (808), and wherein a first path (1010) is formed and configured to supply nonoperational power from the main power source (202) to the second set of stacks (806).

14. The electrolyzer arrangement (800) of claim 10, comprising
a second transient configuration (1106) wherein the first semiconductor switch (1102) is open, the first mechanical switch (1104) is open, the bypass semiconductor switch (1004) is closed, and the bypass mechanical switch (1004) is open, the bypass path (1008) is formed and configured to supply operational power from the main power source (202) to the first set of stacks (808), and wherein a second path (1108) is formed and configured to supply nonoperational power from the subsidiary power source (204).

15. The electrolyzer arrangement (800) of claim 10 or 11,
wherein the main power source (202) is a renewable energy source, and the subsidiary power source (204) is a renewable energy source or a battery.
